(19) Europäisches Patentamt
European Patent Office
Office européen des brevets

(11) Publication number: **0 404 303 B1**

(12) # EUROPEAN PATENT SPECIFICATION

(45) Date of publication of patent specification: **05.07.95**

(51) Int. Cl.[6]: **C08K 9/06**, C08L 23/10, //(C08K9/06,7:14),(C08L23/10, 71:12)

(21) Application number: **90304181.2**

(22) Date of filing: **19.04.90**

The file contains technical information submitted after the application was filed and not included in this specification

(54) **Glass fiber-reinforced resin composition.**

(30) Priority: **13.06.89 JP 148481/89**

(43) Date of publication of application:
**27.12.90 Bulletin 90/52**

(45) Publication of the grant of the patent:
**05.07.95 Bulletin 95/27**

(84) Designated Contracting States:
**DE ES FR GB IT NL**

(56) References cited:
**EP-A- 0 307 802**
**EP-A- 0 356 194**

**DATABASE WPIL, no. 83-26102k, Derwent Publica && JP-A-58 019 347 (SUMITOMO CHEMICAL CO., LTD.) 04-02-1983**

**Kunststoff-Lexikon, K. Stoeckhert, ed., 7th ed., 1981, Carl Hanser, München, page 153**

(73) Proprietor: **SUMITOMO CHEMICAL COMPANY, LIMITED**
**5-33 Kitahama 4-chome**
**Chuo-ku**
**Osaka-shi**
**Osaka (JP)**

(72) Inventor: **Furuta, Motonobu**
**1-102, 2-13-1 Umezono**
**Tsukuba-shi,**
**Ibaraki (JP)**

(74) Representative: **Harvey, David Gareth et al**
**Graham Watt & Co.**
**Riverhead**
**Sevenoaks**
**Kent TN13 2BN (GB)**

EP 0 404 303 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a glass fiber reinforced resin composition having excellent mechanical properties such as heat resistance, mechanical strength, impact strength and the like as well as excellent coatability.

Glass fiber-reinforced propylene resins are used in practice in various applications such as parts of cars, electronic devices, etc. because they have excellent mechanical properties and heat resistance.

For example, it is known that resin compositions blended with crystalline polypropylene, polypropylene modified with oxygen-containing unsaturated organic compounds, glass fiber treated with a silane compound on its surface, and an ethylene-$\alpha$-olefin rubbery polymer have excellent mechanical properties as described in Japanese Patent Publication (Kokai) No. 19347/1983.

However, polypropylene, which is one of the main components of the compositions, is nonpolar and therefore it is difficult to accomplish surface treatment of the composition such as coating, printing, bonding, hot stamping, and plating by vapor deposition. Therefore, various ideas have been proposed to overcome the disadvantage.

For example, people have studied and practised etching of the surface of polypropylene molded products by a physical or chemical process to modify their surfaces, thus performing the surface treatment thereof. However, this process is disadvantageous in that not only does it call for complicated steps, but also the molded products could suffer deformation depending on the conditions under which the etching is carried out, or the effect obtained is insufficient. Thus, the process actually gives no satisfactory results despite high costs.

On the other hand, as described in, for example, Japanese Patent Publication (Kokai) No. 76149/1975 and Japanese Patent Publication (Kokoku) No. 10265/1976, there have been proposed an improved process in which polypropylene is graft-modified with unsaturated carboxylic acid or its anhydride such as acrylic acid and maleic anhydride in the presence of a polymerization initiator such as an organic peroxide, or a process in which such graft-modified product is blended with non-modified polypropylene.

However, these processes suffer in that the amount of the unsaturated carboxylic acid or its anhydride to be introduced by graft-modification is restricted because a decomposition reaction of polypropylene with peroxide takes place simultaneously, resulting in that the effect of the modification of the surface of the resin is insufficient, or even if a sufficient effect is obtained problems occur with respect to the mechanical properties due to the fact that the molecular weight of the resin falls because of the decomposition reaction.

In order to overcome the above-described problems, the present inventors have conducted intensive investigations and have devised the present invention, which provides a resin composition having excellent heat resistance, mechanical properties and coating ability.

The present invention provides a resin composition having excellent heat resistance, mechanical properties and coating ability, comprising

(A) 100 parts by weight of

- (a) 1 to 50 % by weight of polyphenylene ether or polyphenylene ether-containing resin composition,
- (b) 18 at least % by weight of propylene polymer,
- (c) 10 to 40 % by weight of propylene polymer modified with an oxygen-containing unsaturated organic compound, and
- (d) 0 to 30 % by weight of natural or synthetic polymeric material which is elastic at room temperature, and

(B) 30 to 60 parts by weight of glass fiber treated with a silane compound on its surface.

The invention comprehends methods of making such resin compositions by suitably blending together the various components.

The invention will now be explained in more detail in the description which follows, which is given by way of example only.

The polyphenylene ether used as the component (a) in the present invention is a polymer which can be obtained, for example, by oxidation polymerisation of one or more of phenol compounds having general formula (I)

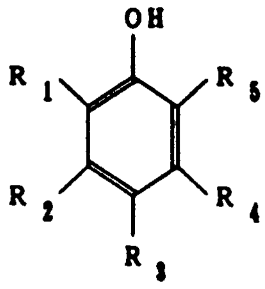

(I)

wherein $R_1$, $R_2$, $R_3$, $R_4$ and $R_5$ each represents a hydrogen atom, a halogen atom, or a substituted or unsubstituted hydrocarbon residue, and at least one of them is a hydrogen atom, with molecular oxygen or gas containing the same in the presence of an oxidation coupling catalyst.

Examples of $R_1$ to $R_5$ are a hydrogen atom, a chlorine atom, a bromine atom, a fluorine atom, an iodine atom, a methyl group, an ethyl group, an n- or isopropyl group, a pri.-, sec.- or tert.-butyl group, a chloroethyl group, a hydroxyethyl group, a phenylethyl group, a benzyl group, a hydroxymethyl group, a carboxyethyl group, a methoxycarbonylethyl group, a cyanoethyl group, a phenyl group, a chlorophenyl group, a methylphenyl group, a dimethylphenyl group, an ethylphenyl group and an allyl group.

Examples of the phenol compounds are phenol, o-, m- or p-cresol, 2,6-, 2,5-, 2,4- or 3,5-dimethylphenol, 2-methyl-6-phenylphenol, 2,6-diphenylphenol, 2,6-diethylphenol, 2-methyl-6-ethylphenol, 2,3,5-, 2,3,6- or 2,4,6-trimethylphenol, 3-methyl-6-tert.-butylphenol, thymol and 2-methyl-6-allylphenol. Alternatively, copolymers of any of the phenol compounds listed above and the other phenol compound, for example, polyhydroxy aromatic compound, may be employed. The polyhydroxy aromatic compound is, for example, bisphenol A, tetrabromobisphenol A, resorcin, hydroquinone and novolak resin.

Preferred examples of the polymers are homopolymer of 2,6-dimethylphenol or 2,6-diphenylphenol and copolymers of a large amount of 2,6-dimethylphenol and a small amount of 3-methyl-6-tert.-butylphenol or of 2,3,6-trimethylphenol.

Any oxidation coupling catalyst may be employed for oxidation polymerization of the phenol compound, as long as it has polymerization ability. Examples thereof are cuprous compound/tert. amine such as cuprous chloride/triethylamine and cuprous chloride/pyridine; cupric compound/amine/alkali metal hydroxide such as cupric chloride/pyridine/potassium hydroxide; manganese salt/primary amine such as manganese chloride/ethanolamine and manganese acetate/ethylenediamine; manganese salt/alcoholate or phenolate such as manganese chloride/sodium methylate and manganese chloride/sodium phenolate; and cobalt salt/tert. amine.

Polymerization temperature for preparing polyphenylene ether is 40 °C or higher (high temperature polymerization) or lower (low temperature polymerization). Either temperature may be used although polymers produced thereby have different properties.

The polyphenylene ether further includes that grafted with a styrenic polymer or another polymer. For instance, one grafted polymer is obtained by graft-polymerizing styrene monomer and/or another comonomer in the presence of polyphenylene ether and organic peroxide (Japanese Patent Publications (Kokoku) 47862/1972, 12197/1973, 5623/1974, 38596/1977, and 30991/1977) or by melt-kneading polyphenylene ether and polystyrene in the presence of a radical initiator (Japanese Patent Publication (Kokai) 142799/1977).

As the polyphenylene ether resin, preferred is one having a reduced viscosity $\eta_{sp/C}$ of as measured in 0.5 g/dl chloroform solution at 25 °C of 0.2 to 0.6 dl/g, preferably 0.23 to 0. 55 dl/g. When $\eta_{sp/C}$ value is below 0.2 dl/g, the heat resistance of the composition is insufficient. On the other hand, the moldability of the composition decreases when $\eta_{sp/C}$ value exceeds 0.6 dl/g.

The polyphenylene ether-containing resin composition used as the component (a) is a resin composition composed of the above-described polyphenylene ether, an alkenyl aromatic resin and/or a rubber-modified alkenyl aromatic resin.

The alkenyl aromatic resin is one containing at least 25% by weight of a polymer unit derived from a monomer having general formula (II)

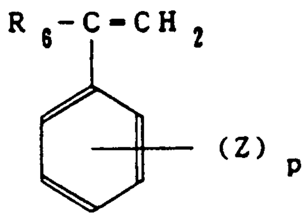

(II)

wherein $R_6$ represents a hydrogen atom, a lower alkyl group (for example, an alkyl group having 1 to 4 carbon atoms), or a halogen atom, Z represents a hydrogen atom, a vinyl group, a halogen atom, a hydroxyl group, or a lower alkyl group, p is 0 or an integer of from 1 to 5.

Examples of the alkenyl aromatic resin include homopolymers such as polystyrene, polychlorostyrene, and poly-α-methylstyrene, and copolymers thereof, styrenecontaining copolymers, for example, styrene/acrylonitrile copolymer, styrene/divinylbenzene copolymer, and styrene/acrylonitrile/α-methylstyrene copolymer. Of these, preferred are homopolystyrene, styrene/α-methylstyrene copolymer, styrene/acrylonitrile copolymer, styrene/α-chlorostyrene copolymer, and styrene/methyl methacrylate copolymer. Particularly preferred is homopolystyrene.

The rubber-modified alkenyl aromatic resin is a binary phase resin system composed of an alkenyl aromatic resin matrix and rubber particles dispersed therein.

The rubber-modified alkenyl aromatic resin can be produced by various methods. For example, it can be obtained by mechanical mixing or by dissolving the rubber-like substance in the alkenyl aromatic monomer and then polymerizing the alkenyl aromatic monomer. The later method is used for producing so-called high-impact polystyrene on an industrial scale. Furthermore, the rubber-modified alkenyl aromatic resin used in the present invention also includes a mixture of the product obtained by the latter method and the rubber-like substance and/or alkenyl aromatic resin.

Blending ratio between polyphenylene ether and alkenyl aromatic resin and/or rubber-modified alkenyl aromatic resin may be varied widely in the range of, for example 1 to 99% by weight of polyphenylene ether and 99 to 1% by weight of alkenyl aromatic resin and/or rubber-modified alkenyl aromatic resin. Optimum composition is determined within this range depending on the purpose and utility.

The propylene polymer used in the components (b) and (c) includes propylene homopolymer and propylene copolymer. By the term "propylene copolymer" is meant random or block copolymer of propylene and α-olefin having 2 to 18 carbon atoms.

Examples of propylene copolymer include ethylene/propylene copolymer, propylene/butene-1 copolymer, propylene/hexene-1 copolymer, propylene/4-methylpentene-1 copolymer, propylene/octene-1 copolymer, and the like.

As the propylene polymer, there can be used propylene homopolymer or propylene copolymer alone, or in the form of a mixture of two or more of them.

In the present invention, highly crystalline propylene polymer may be used as the propylene polymer in the component (b), if desired.

By the term "highly crystalline propylene polymer" is meant a propylene homopolymer or block copolymer which has an isotactic pentad fraction of 0.970 or higher, defined as an isotactic pentad fraction in the boiling heptane-insoluble portion of the propylene homopolymer or of a propylene homopolymer portion of the propylene block copolymer that is the first segment polymerized in the first step of propylene block copolymer formation, or a propylene polymer which has an isotactic pentad fraction defined as above of 0.970 or higher and a content of a heptane-soluble portion of 5.0% by weight or less and a content of a 20 °C xylene-soluble portion of 2.0% by weight or less.

The above-described type of highly crystalline propylene polymers can be prepared by methods described in, for example, Japanese Patent Publication (Kokai) Nos. 28405/1985, 228504/1985, 208606/1986 and 287917/1986.

For applications to those fields where high rigidity is required for, it is preferred to blend the propylene polymer with a nuclei generating agent. It is known that addition of, for example, aluminum or sodium salts of aromatic carboxylic acids (Japanese Patent Publication (Kokai) No.80829/1983), and aromatic carboxylic acids, metal salts of aromatic phosphoric acids or sorbitol derivatives (Japanese Patent Publication (Kokoku) No. 12460/1980 and Japanese Patent Publication (Kokai) No. 129036/1983) or the like gives rise to nuclei of crystal grains thus serving a nuclei generating age (hereinafter, referred to as a nucleating agent).

It is also known that a polymer of vinylcycloalkane having 6 or more carbon atoms is effective as a nucleating agent (Japanese Patent Publication (Kokai) No.1738/1987).

That is, a composition which comprises the propylene polymer blended with the polymer of vinylcycloalkane polymer having 6 or more carbon atoms and which contains from 0.05 to 10,000 ppm by weight of vinylcyloalkane unit in the composition has a higher crystallinity.

Furthermore, a propylene polymer having a high rigidity can be obtained by blending the propylene polymer having a high crystallinity with the vinylcycloalkane polymer.

The propylene polymer as the component (b) of the composition of the present invention preferably has an intrinsic viscosity [$\eta$] (tetraline solution, 135 °C) of from 1.00 to 1.50 dl/g. When propylene copolymer is used as the propylene polymer, the content of ethylene in the copolymer is preferably 4% by weight or less.

The components (b) and/or (c) of the resin composition of the present invention may be blended with a polymer obtained by graft-polymerizing a styrene-based monomer to a propylene polymer.

The styrene-based monomer is represented by general formula (III)

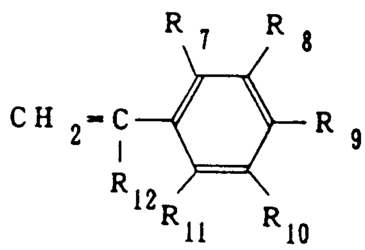

(III)

wherein $R_7$, $R_8$, $R_9$, $R_{10}$ and $R_{11}$ each represents a hydrogen atom, a halogen atom, a substituted or unsubstituted hydrocarbon residue, or a substituted or unsubstituted hydrocarbyloxy residue, and $R_{12}$ represents a hydrogen atom or a lower alkyl group having from 1 to 4 carbon atoms.

Specific examples of the atoms, groups or residues represented by $R_7$, $R_8$, $R_9$, $R_{10}$ or $R_{11}$ include a hydrogen atom, halogen atoms such as a chlorine atom, a bromine atom and an iodine atom, a hydrocarbon residues such as a methyl group, an ethyl group, a propyl group, a vinyl group, an allyl group, a benzyl group and a methylbenzyl group; substituted hydrocarbon groups such as a chloromethyl group and a bromomethyl group; unsubstituted or substituted hydrocarbyloxy residues such as a methoxy group, an ethoxy group, a phenoxy group and a monochloromethoxy group, and the like.

Specific examples of $R_{12}$ include a hydrogen atom, lower alkyl groups such as a methyl group and an ethyl group, and the like.

Specific examples of the styrene-based monomer include styrene, 2,4-dichlorostyrene, p-methoxystyrene, p-methylstyrene, p-phenylstyrene, p-divinylbenzene p-(chloromethoxy)styrene, $\alpha$-methylstyrene, o-methyl-$\alpha$-methylstyrene, m-methyl-$\alpha$-methylstyrene, p-methyl-$\alpha$-methylstyrene and p-methoxy-$\alpha$-methylstyrene. These compounds may be used singly or two or more of them may be used in the form of a mixture. Of these, styrene is preferred.

The component (c) is propylene polymer modified with an oxygen-containing unsaturated organic compound.

The oxygen-containing unsaturated organic compound used for the modification of the propylene polymer is an organic compound having an acid or acid anhydride group such as acrylic acid, methacrylic acid, maleic acid, itaconic acid, fumaric acid, maleic anhydride and itaconic anhydride. Acrylic acid and maleic anhydride are particularly preferred.

The propylene polymer modified with the oxygen-containing unsaturated organic compound as the component (c) can be prepared by a method in which the oxygen-containing unsaturated organic compound and a peroxide are added to a predetermined amount of propylene polymer and the mixture is melted and kneaded in an extruder and a method in which the oxygen-containing unsaturated organic compound is grafted to propylene polymer in water or a solvent using a peroxide.

The peroxide which can be used in the preparation of the modified propylene polymer is not limited particularly and any type of peroxide may be selected suitably.

Examples of the peroxide include azo compounds such as 2,2'-abobisisobutyronitrile, 2,2'-azobis(2,4,4-trimethylvaleronitrile), and organic peroxides such as methyl ethyl ketone peroxide, cyclohexanone peroxide, 3,3,5-trimethylcyclohexanone peroxide, 2,2-bis(t-butylperoxy)butane, t-butyl hydroperoxide, cumene hydroperoxide, diisopropylbenzene hydroperoxide, 2,5-dimethylhexane-2,5-dihydroperoxide, di-t-butyl peroxide, 1,3-bis(t-butylperoxyisopropyl)benzene, 2,5-dimethyl-2,5-di(t-butylperoxy)hexane, 2,5-dimethyl-2,5-di-(t-butylperoxy)hexyne-3, lauroyl peroxide, 3,3,5-trimethylhexanoyl peroxide, benzoylperoxide, t-butyl peracetate, t-butyl peroxyisobutyrate, t-butyloxypivalate, t-butyloxy-2-ethyl hexanoate, t-butylperoxy-3,5,5-trimethyl hexanoate, t-butyl peroxylaurate, t-butyl peroxybenzoate, di-t-butyl peroxyisophthalate, 2,5-dimethyl-2,5-di(benzoylperoxy)hexane, t-butyl peroxymaleate, t-butyl peroxypropylcarbonate, and polystyrene peroxide.

The concentration of the oxygen-containing unsaturated organic compound, for example, maleic anhydride or acrylic acid, in the modified propylene polymer as the component (c) is not critical but is preferably from 0.3 to 6.0% by weight in view of the heat stability and graft ratio of the modified propylene polymer. The concentration of maleic anhydride or acrylic acid in the mixture is determined depending on the concentration of the glass fiber in the composition. Suitable ratios of acrylic acid or maleic anhydride to the glass fiber are from 0.01 to 0.06. When this ratio is below 0.01, the effect of modification is poor and on the other hand, when it is above 0.06, problem on heat resistance occurs in practical application.

In the resin composition of the present invention, a rubber-like substance can be used as component (d), if desired, with a view to improving, particularly, its impact strength.

By the term "rubber-like substance" is meant natural and synthetic polymeric materials which are elastic at room temperature.

Specific examples of the rubber-like substance include natural rubber, butadiene polymer, butadiene/styrene copolymer (all types including random, block and graft copolymers), or their hydrogenation products, isoprene polymer, chlorobutadiene polymer, butadiene/acrylonitrile copolymer, isobutylene polymer, isobutylene/butadiene copolymer, isobutylene/isoprene copolymer, acrylate copolymer, ethylene/propylene copolymer, ethylene/butene copolymer, ethylene/propylene/styrene terpolymer, styrene/isoprene copolymer or their hydrogenation products, styrene/butylene copolymer, styrene/ethylene/propylene terpolymer, perfluoro rubber, fluoro rubber, chloroprene rubber, butyl rubber, silicone rubber, ethylene/propylene/unconjugated diene terpolymer, thiocol rubber, polysulfide rubber, polyurethane rubber, polyether rubber (for example, propylene oxide.), epichlorohydrin rubber, polyester elastomer, polyamide elastomer, epoxy group-containing copolymer.

By the term "epoxy group-containing copolymer" is meant copolymers derived from an unsaturated epoxy compound and an ethylenically unsaturated compound.

There is no limitation on the ratio of the epoxy group-containing copolymer. However, preferred are those containing the unsaturated epoxy compound copolymerized in an amount of from 0.1 to 50% by weight, preferably from 1 to 30% by weight.

The unsaturated epoxy compound specifically includes compounds which have an unsaturated group copolymerizable with the ethylenically unsaturated compound and also have an epoxy group.

For example, there can be cited unsaturated glycidyl esters having the formula (IV) below and unsaturated glycidyl ether having the formula (V) below.

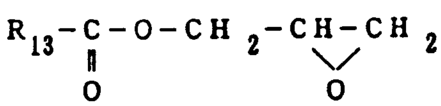

(IV)

wherein $R_{13}$ is a $C_2$ - $C_{18}$ hydrocarbon group having an ethylenically unsaturated bond.

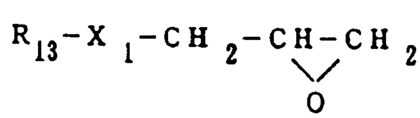

(V)

wherein $R_{13}$ is a $C_2$ - $C_{18}$ hydrocarbon group having an ethylenically unsaturated bond, and $X_1$ is $-CH_2-O-$ or

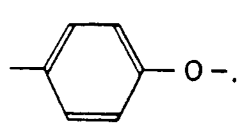

Specific examples thereof include glycidyl acrylate, glycidyl methacrylate, glycidyl itaconates, allyl glycidyl ether, 2-methylallyl glycidyl ether and styrene-p-glycidyl ether.

On the other hand, the ethylenically unsaturated compound includes olefins, vinyl esters of $C_2$ - $C_6$ saturated carboxylic acids, $C_1$ - $C_8$ saturated alcohol/acrylic or methacrylic acid esters, maleates, methacrylates, fumarates, halogenated vinyls, styrenes, nitriles, vinyl ethers or acrylamides. Examples are ethylene, propylene, butene-1, vinyl acetate, methyl acrylate, ethyl acrylate, methyl methacrylate, diethyl malate, diethyl fumarate, vinyl chloride, vinylidene chloride, styrene, acrylonitrile, isobutyl vinyl ether and acrylamide They are used singly or in a mixture of two or more of them. Ethylene is preferable most of all.

By copolymerizing other components such as vinyl acetate and/or methyl acrylate together with ethylene, there occurs a decrease in the glass transition point of the epoxy group-containing copolymer used as the rubber-like substance, which improves further the impact strength at low temperatures of the resin composition of the present invention.

The rubber-like substance may be prepared by any method (e.g., emulsion polymerization, solution polymerization, etc.) using any type of catalyst (e.g., peroxides, trialkylaluminum, lithium halides, nickel-based catalyst,).

In addition, there can be used those rubber-like substances having various degree of crosslinking, those having various proportions of microstructures (e.g, cis-structure, trans-structure, vinyl group,), or those having various mean particle size of rubber particles.

Various copolymers including random copolymers, block copolymers, graft copolymers, can be used as the rubber-like substance in the present invention. Also, modified products derived from these copolymers can be used as the rubber-like substance.

Examples of the modified products include those modified with one or more of styrene, maleic anhydride, glycidyl methacrylate, glycidyl acrylate or carboxylic acid-containing compounds.

These rubber-like substances (inclusive of modified products) can be used singly or as a mixture of two or more of them.

Among them, ethylene/α-olefin copolymer rubber or its modified products can be used preferably.

The ethylene/α-olefin copolymer rubber includes copolymer rubbers of ethylene with other α-olefin such as propylene, butene-1, pentene-1, hexene-1, 4-methylpentene-1 or octene-1 and terpolymer rubbers of ethylene/propylene/butene-1 terpolymer.

The ethylene content of the ethylene/α-olefin copolymer rubber is 15 to 85% by weight, preferably 40 to 85% by weight. Highly crystalline copolymers having an ethylene content of above 85% by weight are difficult to process under ordinary rubber molding conditions and those having an ethylene content of below 15% by weight are undesirable since they have increased glass transition point (Tg), which deteriorates their rubber-like properties. Preferred glass transition point is -10 °C or less.

Ethylene/α-olefin/non-conjugated diene terpolymer rubber can also be used. However, it is required that the content of the non-conjugated diene is 20% by weight or less. This is because with more than 20% weight of non-conjugated diene, gelation occurs while kneading, which results in deterioration of the flowability of the resin composition and thus is undesirable.

Preferred examples of the non-conjugated diene include ethylidenenorbornene, dicyclopentadiene, and 1,4-hexadiene.

It is preferred that the number average molecular weight of the copolymer rubber is in the range of 10,000 to 100,000 in order to facilitate kneading.

When the molecular weight is too small, it is difficult to handle the copolymer rubber upon supplying it to an extruder. On the other hand, the flowability of the copolymer decreases making it difficult to handle the copolymer rubber when its molecular weight is too large.

Mooney viscosity ($ML_{1+4}$, 121 °C) is preferably 5 to 120.

Molecular weight distribution is not limited particularly. However, preferred range of Q value (weight average molecular weight/number average molecular weight) is 1 to 30, more preferably 2 to 20.

The modified ethylene/α-olefin copolymer rubber used as the rubber-like substance (component (d)) includes unsaturated dicarboxylic acid-modified ethylene/α-olefin copolymer obtained by graft copolymerizing an unsaturated dicarboxylic acid onto the above-described ethylene/α-olefin copolymer rubber as starting material.

Examples of the unsaturated dicarboxylic acid are maleic anhydride, maleic acid, fumaric anhydride, citraconic anhydride.

Any known process can be used to prepare the modified ethylene/α-olefin copolymer rubber.

For example, maleic anhydride-modified ethylene/α-olefin copolymer can be prepared by adding maleic anhydride and a radical initiator to ethylene/α-olefin copolymer in a hydrocarbon solvent and reacting them at 60 to 150 °C for several minutes to several hours to obtain a solution containing a modified rubber. In this

case, an alcohol or amide can be added appropriately, if desired, to convert maleic anhydride to its half ester or half amide. The solution thus obtained is poured into a large amount of methanol, acetone or the like to recover the modified rubber.

The modified rubber can also be obtained by kneading maleic anhydride and the radical initiator together with the ethylene/α-olefin copolymer in an extruder. For example, the modified rubber can be obtained by kneading 0.5 to 15 parts by weight of maleic anhydride and 0.005 to 1.0 part by weight of the radical initiator per 100 parts by weight of the rubber at 150 to 300 °C for several minutes to several tens minutes. In this case, a gelation preventing agent, a phenolic antioxidant such as butylated hydroxytoluene and the like can be used in combination, if desired.

In addition to the above-described maleic anhydridemodified ethylene/α-olefin copolymer rubber, there can be used various modified ethylene/α-olefin copolymer rubber, for example, those modified ethylene/α-olefin copolymer rubbers which are modified with a monomeric compound other than maleic anhydride selected from methyl acrylate, methyl methacrylate, allyl glycidyl ether, glycidyl methacrylate and glycidyl acrylate.

Also, modified ethylene/α-olefin copolymer rubbers which are modified with two or more of the monomeric compounds described above.

Furthermore, two or more rubbers selected from the ethylene/α-olefin copolymer rubber and various modified ethylene/α-olefin copolymer rubbers can be used simultaneously.

Although the styrene-based monomer-grafted modified ethylene/α-olefin copolymer rubber can be obtained by the above-described method, it can also be obtained by the following method.

That is, styrene-based monomer-grafted modified ethylene/α-olefin copolymer rubber can be obtained by dispersing chips or pellets of the ethylene/α-olefin copolymer rubber in purified water together with a dispersing agent, impregnating the rubber with a styrene-based monomer, and then reacting them using a radical initiator at 50 to 150 °C for 1 to 5 hours.

The last component of the resin composition of the present invention is a glass fiber treated with a silane compound on the surface thereof.

The glass fiber may be one which is used in ordinary glass fiber-reinforced resins. It has a diameter of generally 5 to 20 µm, and is treated with a silane compound on its surface.

The surface treating agent is at least one selected from epoxysilanes such as β-(3,4-epoxycyclohexyl)-ethyltrimethoxysilane and γ-glycidoxypropyltrimethoxysilane, vinylsilanes such as vinyltriethoxysilane and vinyltrichlorosilane, and aminosilanes such as γ-aminopropyltriethoxysilane and N-β-(aminoethyl)-γ-aminopropyltrimethoxysilane.

The surface treatment is usually performed by a method in which the glass fiber is dipped in the surface treating agent containing the silane compound followed by drying.

The silane compound is preferably added in an amount of 0.02 to 0.2 PHP (part by weight per 100 parts by weight of the glass fiber). When the amount is below 0.02 PHP, no improvement in the physical properties is observed. On the other hand, addition of the silane compound in an amount of above 0.2 PHP fails to improve the mechanical properties and heat resistance of the resin composition.

Preferably, the glass fiber contains 0.2 to 1.2 PHP of an epoxy resin as binder. No effect of the binder is observed with the amount of below 0.2 PHP. When the binder is added in an amount of above 1.2 PHP, improvement in the physical properties of the resin composition is not so much but there occurs problems with respect to the heat stability such as coloring.

Taking the sum of the amounts of the components (a), (b), (c) and (d) as 100% by weight, the resin composition of the present invention contains

1 to 50 % by weight of the ether component (a), at least- 18 % by weight of the propylene component (b),

10 to 40 % by weight of the modified propylene component (c), and

0 to 30 % by weight of the natural or synthetic polymeric material which is elastic at room temperature, component (d).

When the content of the component (a) is below 1 part by weight, improvement in the heat resistance and coating ability of the resin composition is not observed. On the other hand, the resin composition has insufficient chemical resistance when the content is above 50 parts by weight.

The resin composition has insufficient mechanical strength for some applications when the content of the component (b) is below 18 parts by weight and adhesion between the resin and glass fiber is insufficient when it exceeds 90 parts by weight.

The adhesion between the resin and glass fiber is also insufficient when the content of the component (c) is below 10 parts by weight. The mechanical strength of the resin composition is insufficient when the content of the component (c) is above 40 parts by weight.

When the content of the component (d) exceeds 30 parts by weight, there is observed remarkable decrease in the heat resistance of the resin composition.

In the resin composition of the present invention, the component (e) is used in an amount of 3 to 60 parts by weight per 100 parts by weight of the total weight of the components (a), (b), (c) and (d).

When the content of the glass fiber component (e) is below 3 parts by weight, the effect of reinforcement by the glass fiber is insufficient. On the other hand, when it is above 60 parts by weight, the resin composition has imbalanced kinetic properties and its manufacture is difficult.

Other high molecular compounds or polymers can be added to the resin composition of the present invention.

Examples of the other polymers include polyolefins such as polymethylpentene and polyethylene; homopolymers and copolymers of various vinyl compounds such as polyvinyl chloride, polystyrene, polymethyl methacrylate, polyvinyl acetate, polyvinylpyridine, polyvinylcarbazole, polyacrylamide, polyacrylonitrile, ethylene/vinyl acetate copolymer, alkenyl aromatic resins; polycarbonate, polysulfone, polyethylene terephthalate, polybutylene terephthalate, polyarylene ester (e.g., U polymer (trade name for a product by UNITIKA CORPORATION), polyphenylene sulfide; polyamides such as Nylon-6, Nylon-6,6 and Nylon-12; and condensation polymers such as polyacetal. Also, there can be cited various thermosetting resins such as silicone resins, fluoroplastics, polyimides, polyamideimides, phenol resins, alkyd resins, unsaturated polyester resins, epoxy resins and diallyl phthalate resins.

To the resin composition of the present invention can be added rosin resins, terpene resins, chroman/indene resins, saturated alicyclic hydrocarbon resins, aromatic hydrocarbon resins, their hydrogenated products or modified products.

In practicing the present invention, it is possible to perform kneading with adding inorganic or organic fillers, plasticizers, stabilizers, dyes and pigments such as carbon black, silica, titanium oxide.

To the resin used in the present invention, there can be added, if desired, various additives such as antioxidants, mineral oils, dyes, pigments, paraffin waxes, heat stabilizers, light stabilizers, lubricants, antistatic agents, inorganic or organic colorants, anticorrosion agents, crosslinking agents, foaming agents, plasticizers, fluorescent agents, surface smoothing agents, surface luster improving agents, and flame retardants during the manufacturing step or the processing steps subsequent thereto.

The method of preparing the resin composition of the present invention is not limited particularly and any known method can be used. However, melt-kneading methods are used practically from an industrial point of view.

For the melt-kneading, there can be generally used kneading apparatus such as single- or twin-screw extruders and various types of kneaders. Particularly preferred is a high speed twin-screw extruder.

Before kneading, it is preferred uniformly to blend powder or pellets of the component resins together with glass fiber in a tumbler or a Henschel mixer. However, the blending may be omitted, if desired, and each resin may be fed to a kneader through a metering apparatus.

The resin composition, after kneading, is molded e.g. using injection molding, extrusion molding, press or compression molding, and blow molding. Alternatively, dry blending the resin materials at the injection or extrusion molding without prekneading and direct kneading are made in the melt processing to produce a shaped article.

The resin composition of the present invention has excellent heat resistance, processability, kinetic properties, chemical resistance and the like and making use of these characteristics it can be used for preparing shaped articles, sheets, tubes, films, fibers, laminates, coating materials, and the like by injection molding or extrusion molding.

It can be used particularly for various parts of cars, for example, interior or exterior fitting materials such as bumpers, installment panels, instrument panels, fenders, trims, door panels, wheel covers, side protectors, side seal garnishes, trunk lids, hoods, quarter panels, air cleaners, core material of seats, glove boxes, console boxes, cooling fans, sirocco fans, brake oil tanks, lamp housings, air intakes, lower aprons, spoilers, front grilles, radiator grilles, mirror housings, bonnets, roofs, etc., and parts of machines for which heat resistance is required.

It can also be used as materials for parts of motor cycles, for example, covering materials muffler covers, leg shields, etc. Furthermore, it can be used as materials for electric and electronic parts for which mechanical strength and heat resistance are required, for example, housings, chassis, connectors, printed substrates, pulleys, and the like.

EXAMPLES

The present invention is explained further by the examples below, which are merely illustrative. Heat distortion temperature (which is abbreviated as H. D. T.), Izod impact strength (thickness: 3.2 mm) and bending test are observed in accordance with JIS K7207, JIS K7110 and JIS K6758, respectively.

The reduced viscosity ($\eta_{sp/C}$) of polyphenylene ether is measured as 0.5 g/dl chloroform solution at 25 ° C. The intrinsic viscosity [$\eta$] of propylene polymer is measured as tetraline solution at 135 ° C The units of reduced viscosity and intrinsic viscosity are dl/g.

Heat resistance and kinetic properties are measured by using test pieces prepared by the following method. That is, predetermined amounts of the respective components and antioxidant are mixed in a powder mixer for 2 minutes and extruded through a screw extruder with a vent (screw: 65 mm$\phi$, C.R. = 8.0) at 240 ° C to form pellets. The composition thus obtained is injection molded under conditions of a resin composition of 270 ° C, a pressure of 870 kg/cm$^2$(85 MPa), and total cycle of 35 seconds to prepare test pieces, which are then subjected to tests for physical properties.

Tests for coating ability are performed as follows.

Preparation of Test Samples

Resin composition is molded through 3 ounce (85 g) injection molding machine with controlling the resin temperature at 260 ° C to obtain samples in the form of plate having a size of 150 mm in length X 90 mm in width X 2 mm in thickness.

Coating Ability Test

The surfaces of the plate samples are washed in 1,1,1-trichloroethane vapor for 30 seconds and dried at room temperature. Thereafter, they are directly spray-coated with a urethane based coating material (FLEXENE #101, produced by NIPPON BEE CHEMICAL CO., LTD.) and bake-finished in an oven at 120 ° C for 30 minutes, followed by standing at room temperature for 240 hours.

Adhesion Test of Coating Film

On the coating film of the above-described coated samples are cut 100 checker squares (10 squares X 10 squares), each square being of a size of 2 mm square, using a razor blade, and CELLOTAPE (registered trademark for an adhesive tape manufactured by NICHIBAN CO., LTD.) of 24 mm wide is pressed thereon with fingers. Thereafter, the end of the adhesive tape is held with fingers and the tape is peeled off from the coated film at a stroke. The number of remaining checkers of the coated film is evaluated as remaining ratio (%).

Examples 1 to 7 and Comparative Examples 1 to 4

The following are used as the components (a), (b), (c), (d) and (e).

Component (a); Polyphenylene Ether:

The polyphenylene ether used is one manufactured by NIPPON POLYETHER CO., LTD. Sample names (abbreviations) and reduced viscosity ($\eta_{sp/C}$) are as follows.

PO-1: $\eta_{sp/C}$ = 0.30
PO-2: $\eta_{sp/C}$ = 0.52

Component (b); Propylene Polymer:

Propylene polymer is used which has been prepared on a small scale by using Ziegler catalyst. Sample names (abbreviations), and inherent viscosity [$\eta$] and ethylene content are as follows.

PP-1: [$\eta$] = 1.03 Ethylene content; 0% by weight
PP-2: [$\eta$] = 1.34 Ethylene content; 3.3% by weight
PP-3: PP-1 melt-kneaded with vinylcyclohexane (vinylcyclohexane concentration: 340 ppm)
PP-4: PP-2 modified with styrene as follows.

Preparation of Modified PP-2:

Pellets (1 kg) of PP-2 are charged in a 10 liter autoclave together with 4 liters of water, 140 g of styrene monomer, 6 g of a dispersing agent (METLOSE 90SH-100, a trade name) and peroxide (PERBUTYL RV, a trade name) and reacted at 120°C for about 1 hour in a nitrogen stream followed by cooling. Then, polystyrene is extracted and removed from the reaction mixture with methyl ethyl ketone to recover styrene-grafted propylene polymer composition. The amount of styrene grafted onto the propylene polymer composition is 113 g. Degree of graft polymerization is 80%.

Component (c); Oxygen-Containing Unsaturated Organic Compound-Modified Propylene Polymer:

Modified propylene polymer is prepared by adding acrylic acid or maleic anhydride to the propylene polymer produced on a small scale, charging the mixture together with SUNPEROX TO (trade name for a product by SANKEN KAKOU CO., LTD.) in a lump, and granulating them at a resin temperature of 230°C by using a vent-type extruder (L/D = 25, C.R. = 3.3, 65 mmϕ).

Sample names (abbreviations) and composition are as follows.

MP-1: Base PP, [η] = 1.33, ethylene content: 0% by weight, maleic anhydride content: 1.9% by weight

MP-2: [η] = 1.38, ethylene content: 1.2% by weight, acrylic acid content: 2.1% by weight,

MP-3: [η] = 1.31, ethylene content: 2.8% by weight, maleic anhydride content: 0.2% by weight.

Component (d); Rubber-like Substance:

Ethylene propylene copolymer is used which has been prepared on a small scale. Sample names and characteristics are as follows.

RU-1: [η] = 1.4, ethylene content: 71% by weight

RU-2: [η] = 1.9, ethylene content: 53% by weight

RU-3: Styrene-modified SUMITOMO ESPRENE E400 (trade name for a product by SUMITOMO CHEMICAL CO., LTD., propylene content: 32% by weight, $ML_{1+4}$ 121°C = 52), styrene content: 8.3% by weight.

Other rubber-like substances used are shown below together with their abbreviations.

RU-4: SUMITOMO SBR 1507 (trade name for styrene/butadiene random copolymer rubber manufactured by SUMITOMO CHEMICAL CO., LTD.),

RU-5: KRATON G1650 (trade name for styrene/ethylene/butylene/styrene block copolymer rubber (SEBS) manufactured by SHELL CHEMICAL CORP.),

RU-6: KRATON G1701X (trade name for styrene/ethylene/propylene block copolymer rubber (SEP) manufactured by SHELL CHEMICAL CORP.),

RU-7: DIENE 35A (trade name for polybutadiene manufactured by ASAHI CHEMICAL CO., LTD.).

Component (e); Glass Fiber:

Glass fiber used is treated with epoxy resin as binder on it surface. Sample names and treatments are as follows.

GF-1: 1 PHR of γ-aminopropyltrimethoxysilane is added to glass fiber,

GF-2: 1 PHR of vinylethoxysilane is added to glass fiber.

Resin compositions are obtained kneading the above components in proportions shown in Tables 1 and 2 below. Determination of the physical properties and coating tests are performed and results obtained are shown in Tables 1 and 2.

TABLE 1

| Sample | COMPOSITION (Part by Weight) | | | | | PHYSICAL PROPERTY | | | |
|---|---|---|---|---|---|---|---|---|---|
| | Poly-Phenylene Ether PO-1 | Mofified Propylene Polymer MP-1 | Propylene Polymer PP-1 | Rubber-Like Substance RU-1 | Glass Fiber GF-1 | H. D. T $4.6kg/cm^2$ (°C) | Izod Impact Notched (room t.) (kg·cm/cm) | Modulus of Flexural Elasticity ($kg/cm^2$) | Coatability Test Ramaining Ratio (%) |
| Ex. 1 | 10 | 15 | 45 | 0 | 30 | 167 | 11 | 58000 | 100 |
| Ex. 2 | 10 | 15 | 45 | 10 | 30 | 162 | 15 | 56800 | 100 |
| Ex. 3 | 34 | 15 | 40 | 0 | 20 | 164 | 9 | 56000 | 98 |
| C.Ex.1 | 0 | 18 | 42 | 0 | 30 | 158 | 9 | 55000 | 75 |
| C.Ex.2 | 10 | 0 | 60 | 0 | 30 | 143 | 6 | 42000 | 64 |

TABLE 2

| Sample | COMPOSITION (Part by Weight) Poly-Phenylene Ether PO-2 | Mofified Propylene Polymer | | Propylene Polymer | | Rubber-Like Substance | | Glass Fiber GF-2 | PHYSICAL PROPERTY H. D. T 4.6kg/cm$^2$ (°C) | Izod Impact Notched (room t.) (kg·cm/cm) | Modulus of Flexural Elasticity (kg/cm$^2$) | Coatability Test Ramaining Ratio (%) |
|---|---|---|---|---|---|---|---|---|---|---|---|---|
| Ex. 4 | 25 | MP-2 | 35 | PP-2 | 15 | RU-2 | 10 | 15 | 148 | 18 | 39800 | 100 |
| Ex. 5 | 25 | MP-2 | 35 | PP-3 | 15 | RU-6 | 10 | 15 | 142 | 16 | 43500 | 97 |
| Ex. 6 | 25 | MP-2 | 35 | PP-4 | 15 | RU-4<br>RU-3 | 7<br>3 | 15 | 145 | 20 | 45000 | 99 |
| Ex. 7 | 25 | MP-3 | 35 | PP-4 | 15 | RU-5<br>RU-7 | 8<br>2 | 15 | 143 | 24 | 46200 | 100 |
| C.Ex.3 | 0 | MP-2 | 35 | PP-4 | 15 | RU-4<br>RU-3 | 7<br>3 | 15 | 138 | 16 | 37000 | 58 |
| C.Ex.4 | 0 | MP-2 | 60 | PP-4 | 15 | RU-4<br>RU-3 | 7<br>3 | 15 | 123 | 15 | 32600 | 76 |

From the results shown in Tables 1 and 2, it is apparent that the resin composition comprised by polyphenylene ether (component (a)), propylene polymer (component (b)), oxygen-containing unsaturated organic compound-modified propylene polymer (component (c)), rubber-like substance (component (d)) and glass fiber treated with silane compound on its surface (component (e)) exhibits high heat resistance and excellent kinetic properties and is superior in coating ability to a resin composition comprised by the

components (b), (c), (d) and (e) (lacking component (a)).

As described above, the present resin composition not only has excellent molding processability but also can be molded into shaped articles superior in balance among various physical properties as well as in its coating ability.

The novel resin composition provided by the present invention is easily worked by shaping procedures which are familiar to the skilled artisan, for example, injection molding, extrusion molding, press molding, blow molding, etc., to give rise to various products which are superior in balance among physical properties such as impact strength, heat resistance and hardness, have excellent uniformity in appearance and in smoothness.

**Claims**

**Claims for the following Contracting States : DE, FR, GB, IT, NL**

1. A resin composition comprising:
   (A) 100 parts by weight of
      (a) 1 to 50 % by weight of polyphenylene ether or polyphenylene ether-containing resin composition,
      (b) at least 18 % by weight of propylene polymer,
      (c) 10 to 40 % by weight of propylene polymer modified with an oxygen-containing unsaturated organic compound, and
      (d) 0 to 30 % by weight of a natural or synthetic polymeric material which is elastic at room temperature, and
   (B) 3 to 60 parts by weight of silane treated glass fiber.

2. A resin composition according to Claim 1, wherein said polyphenylene ether used as the component (a) is a polymer obtained by oxidation polymerization of one or more of phenol compounds having general formula (I)

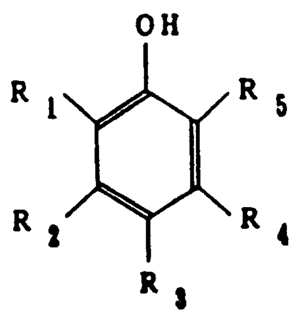

(I)

wherein $R_1$, $R_2$, $R_3$, $R_4$ and $R_5$ each represents a hydrogen atom, a halogen atom, or a substituted or unsubstituted hydrocarbon residue, and at least one of them is a hydrogen atom.

3. A resin composition according to Claim 1 or Claim 2, wherein said propylene polymer (b) is a highly crystalline polypropylene which is a propylene homopolymer or block copolymer having an isotactic pentad fraction of 0.970 or higher, defined as an isotactic pentad fraction in a boiling heptane-insoluble portion of the propylene homopolymer portion of the propylene.

4. A resin composition according to Claim 3, wherein said propylene polymer has a content of a heptane-soluble portion of 5.0% by weight or less and a content of a 20 °C xylene-soluble portion of 2.0% by weight or less.

5. A resin composition according to any one of Claims 1 to 4, wherein said propylene polymer as the component (b) is a crystalline propylene polymer which has an intrinsic viscosity [η] (tetraline solution, 135 °C) of from 1.00 to 1.50 dl/g and an ethylene content of 4% by weight or less.

6. A resin composition according to any one of Claims 1 to 5, wherein the oxygen-containing unsaturated organic compound in said component (c) is an organic compound having one or more of an acid or acid anhydride unit selected from acrylic acid, methacrylic acid, maleic acid, itaconic acid, fumaric acid,

maleic anhydride and itaconic anhydride.

**7.** A resin composition according to any one of Claims 1 to 6, wherein the said polymeric material (d) is at least one component selected from ethylene/α-olefin copolymer and its modified products, ethylene/propylene/unsaturated diene rubber and its modified products, butadiene/styrene copolymer and its modified products and epoxy group-containing copolymer.

**8.** A resin composition according to Claim 7, wherein said ethylene/α-olefin copolymer is one which has an ethylene content of 15 to 85% by weight, a Mooney viscosity of ML1+4, (121°C) of 5 to 120, a glass transition point of -10°C or less.

**9.** A resin composition according to any one of Claims 1 to 8, wherein the said silane compound is at least one silane compound selected from β-(3,4-epoxycyclohexyl)ethyltrimethoxysilane, γ-glycidoxypropyltrimethoxysilane, vinyltriethoxysilane, vinyltrichlorosilane, γ-aminopropyltriethoxysilane and N-β-(aminoethyl)-γ-aminopropyltrimethoxysilane.

**10.** A molded article which is made of the resin composition according to any one of Claims 1 to 9.

**11.** An article according to Claim 10, which is an automotive part selected from a bumper, instrument panel, fender, trim, door panel, wheel cap, side protector, side seal garnish, trunk lid, hood, quarter panel, air intake, lower apron, spoiler, front grille, radiator grille, mirror housing, air cleaner, core material of seat, glove box, console box, cooling fan, sirocco fan, brake oil tank, lamp housing, and roof.

**Claims for the following Contracting State : ES**

**1.** A method of making a resin composition comprising the steps of:

(A) preparing a mixture of

(a) 1 to 50 % by weight of polyphenylene ether or polyphenylene ether-containing resin composition,

(b) at least 18 % by weight of propylene polymer,

(c) 10 to 40 % by weight of propylene polymer modified with an oxygen-containing unsaturated organic compound, and

(d) 0 to 30 % by weight of a natural or synthetic polymeric material which is elastic at room temperature, and

(B) adding to 100 parts by weight of the mixture 3 to 60 parts by weight of silane treated glass fiber.

**2.** A method according to Claim 1, wherein said polyphenylene ether used as the component (a) is a polymer obtained by oxidation polymerization of one or more of phenol compounds having general formula (I)

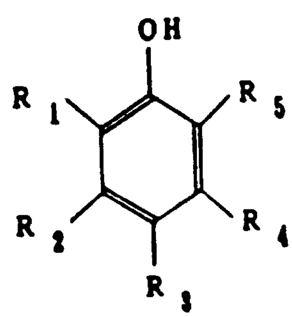

(I)

wherein $R_1$, $R_2$, $R_3$, $R_4$ and $R_5$ each represents a hydrogen atom, a halogen atom, or a substituted or unsubstituted hydrocarbon residue, and at least one of them is a hydrogen atom.

**3.** A method according to Claim 1 or Claim 2, wherein said propylene polymer (b) is a highly crystalline polypropylene which is a propylene homopolymer or block copolymer having an isotactic pentad fraction of 0.970 or higher, defined as an isotactic pentad fraction in a boiling heptane-insoluble portion

of the propylene homopolymer portion of the propylene.

4. A method according to Claim 3 wherein said propylene polymer has a content of a heptane-soluble portion of 5.0% by weight or less and a content of a 20 °C xylene-soluble portion of 2.0% by weight or less.

5. A method according to any one of Claims 1 to 4, wherein said propylene polymer as the component (b) is a crystalline propylene polymer which has an intrinsic viscosity [$\eta$] (tetraline solution, 135 °C) of from 1.00 to 1.50 dl/g and an ethylene content of 4% by weight or less.

6. A method according to any one of Claims 1 to 5, wherein the oxygen-containing unsaturated organic compound in said component (c) is an organic compound having one or more of an acid or acid anhydride unit selected from acrylic acid, methacrylic acid, maleic acid, itaconic acid, fumaric acid, maleic anhydride and itaconic anhydride.

7. A method according to any one of Claims 1 to 6, wherein the said polymeric material (d) is at least one component selected from ethylene/$\alpha$-olefin copolymer and its modified products, ethylene/propylene/unsaturated diene rubber and its modified products, butadiene/styrene copolymer and its modified products and epoxy group-containing copolymer.

8. A method according to Claim 7, wherein said ethylene/$\alpha$-olefin copolymer is one which has an ethylene content of 15 to 85% by weight, a Mooney viscosity of ML1 + 4, (121 °C) of 5 to 120, a glass transition point of -10 °C or less.

9. A method according to any one of Claims 1 to 8, wherein the said silane compound is at least one silane compound selected from $\beta$-(3,4-epoxycyclohexyl)ethyltrimethoxysilane, $\gamma$-glycidoxy-propyltrimethoxysilane, vinyltriethoxysilane, vinyl-trichlorosilane, $\gamma$-aminopropyltriethoxysilane and N-$\beta$-(aminoethyl)-$\gamma$-aminopropyltrimethoxysilane.

10. A molded article which is made of the resin composition according to any one of Claims 1 to 9.

11. An article according to Claim 10, which is an automotive part selected from a bumper, instrument panel, fender, trim, door panel, wheel cap, side protector, side seal garnish, trunk lid, hood, quarter panel, air intake, lower apron, spoiler, front grille, radiator grille, mirror housing, air cleaner, core material of seat, glove box, console box, cooling fan, sirocco fan, brake oil tank, lamp housing, and roof.

**Patentansprüche**
**Patentansprüche für folgende Vertragsstaaten : DE, FR, GB, IT, NL**

1. Eine Harzzusammensetzung, umfassend:
   (A) 100 Gewichtsteile von
      (a) 1 bis 50 Gewichts-% Polyphenylenäther oder Polyphenylen-Äther enthaltende Harzzusammensetzung,
      (b) wenigstens 18 Gewichts-% Propylenpolymer,
      (c) 10 bis 40 Gewichts-% Propylenpolymer, modifiziert mit einer Sauerstoff enthaltenden ungesättigten organischen Verbindung und
      (d) 0 bis 30 Gewichts-% eines natürlichen oder synthetischen polymeren Materials, Gas bei Raumtemperatur elastisch ist, sowie
   (B) 3 bis 60 Gewichtsteile einer Silan behandelten Glasfeser.

2. Eine Harzzusammensetzung gemäß Anspruch 1, worin besagter Polyphenylenäther, der als der Bestandteil (a) verwendet wird, ein Polymer ist, das durch Oxidationspolymerisation von einer oder mehreren Phenolverbindungen erhalten wird, die die allgemine Formel (I) besitzen

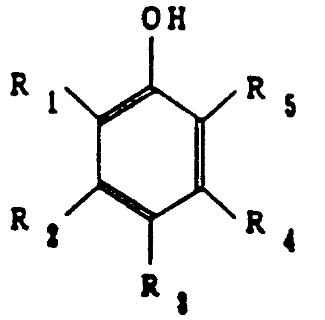

(I)

worin $R_1$, $R_2$, $R_3$, $R_4$ und $R_5$ jeweils ein Wasserstoffatom, ein Halogenatom oder einen substituierten oder unsubsti-tuierten Kohlenwasserstoffrest repräsentieren, und wenigstens eines von ihnen ein Wasserstoffatom ist.

**3.** Eine Harzzusammensetzung gemäß Anspruch 1 oder Anspruch 2, worin besagtes Propylenpolymer (b) ein hoch kristallines Polypropylen ist, das ein Polypropylen-Homopolymer oder -Blockcopolymer mit einer isotaktischen Pentad-Fraktion von 0,970 oder höher ist, definiert als eine isotaktische Pentad-Fraktion in eine in siedendem Heptan unlöslichen Anteil des Propylen-Homopolymeranteils des Propylens.

**4.** Eine Harzzusammensetzung gemäß Anspruch 3, worin besagtes Propylenpolymer einen Gehalt eines Heptanlöslichen Anteils von 5,0 Gewichts-% oder weniger und einen Gehalt eines bei 20 °C Xylol löslichen Anteils von 2,0 Gewichts-% oder weniger hat.

**5.** Eine Harzzusammensetzung gemäß einem der Ansprüche 1 bis 4, worin besagtes Propylenpolymer als die Komponente (b) ein kristallines Propylenpolymer ist, das eine grundmolare Viskosität [$\eta$] (Tetralin-Lösung, 135 °C) von 1,00 bis 1,50 dl/g und einen Ethylengehalt von 4 Gewichts-% oder weniger hat.

**6.** Eine Harzzusammensetzung gemäß einem der Ansprüche 1 bis 5, worin die Sauerstoff enthaltende ungesättigte organische Verbindung in besagter Komponente (c) eine organische Verbindung ist,die eine oder mehrere einer Säure- oder Säureanhydrid-Einheit besitzt, ausgewählt aus Acrylsäure, Methacrylsäure, Maleinsäure, Itaconsäure, Fumarsäure, Maleinsäureanhydrid und Itaconsäureanhydrid.

**7.** Eine Harzzusammensetzung gemäß einem der Ansprüche 1 bis 6, worin das besagte polymere Material (d) wenigstens ein Bestandteil ist, der aus Ethylen/$\alpha$-Olefin-Copolymer und seinen modifizierten Produkten, Ethylen/Propylen/ungesättigtem Dien-Gummi und seinen modifizierten Produkten, Butadien/Styrol-Copolymer und seinen modifizierten Produkten sowie Epoxy-Gruppen enthaltendem Copolymer ausgewählt ist.

**8.** Eine Harzzusammensetzung gemäß Anspruch 7, worin besagtes Ethylen/$\alpha$-Olefin-Copolymer ein solches ist, das einen Ethylengehalt von 15 bis 85 Gewichts-%, eine MooneyViskosität von MLI + 4, (121 °C) von 5 bis 120, einen Glasübergangspunkt von -10 °C oder weniger hat.

**9.** Eine Harzzusammensetzung gemäß einem der Ansprüche 1 bis 8, worin die besagte Silan-Verbindung wenigstens eine Silan-Verbindung ist, die aus $\beta$-(3,4-Epoxycyclo-hexyl)ethyltrimethoxysilan, $\gamma$-Glycidoxypropyltrimethoxysilan, Vinyltriethoxysilan, Vinyltrichlorsilan, $\gamma$-Aminopropyltriethoxysilan und N-$\beta$-(Aminoethyl)- $\gamma$-Aminopropyltrimethoxysilan ausgewählt ist.

**10.** Ein ausgeformter Gegenstand, der aus der Harzzusammensetzung gemäß einem der Ansprüche 1 bis 9 hergestellt ist.

**11.** Ein Gegenstand gemäß Anspruch 10, der ein Fahrzeugteil ist, ausgewählt für eine Stoßstange, Armaturenbrett, Kotflügel, Innenausstattung, Türverkleidung, Radkappe, Seitenschutzvorrichtung, Seitenabschlußverzierung, Kofferraumdeckel, Haube, Krümmerverkleidung, Lufteinlaß, untere Abdeckplatte, Spoiler, Frontgrill, Kühlergrill, Spiegelgehäuse , Luftreiniger, Kernmaterial des Sitzes, Handschuhfach, Konsolenfach, Kühlgebläse, Sirocco-Gebläse, Bremsöltank, Lampengehäuse und Dach.

**Patentansprüche für folgenden Vertragsstaat : ES**

1. Verfahrenzur Herstellung einer Harzzusammensetzung umfassend die folgenden Stufen:
   (A) Herstellung einer Mischung von
   (a) 1 bis 50 Gewichts-% Polyphenylenäther oder Polyphenylenäther enthaltende Harzzusammensetzung,
   (b) wenigstens 18 Gewichts-% Propylenpolymer,
   (c) 10 bis 40 Gewichts-% Propylenpolymer, welches mit einer sauerstoffhaltigen ungesättigten organischen Verbindung modifiziert ist und
   (d) 0 bis 30 Gewichts-% eines natürlichen oder synthetischen polymeren Materials, welches bei Raumtemperatur elastisch ist, sowie
   (B) Zugabe von 3 bis 60 Gewichtsteilen silanbehandelter Glasfasern zu 100 Gewichtsteilen der Mischung.

2. Verfahren nach Anspruch 1, worin der als Komponente (a) verwendete besagte Polyphenylenäther ein Polymer ist, welches durch Oxidationspolymerisation von einer oder mehreren Phenolverbindungen mit der allgemeinen Formel(I)

   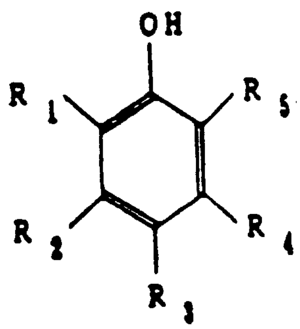

   (I)

   erhalten worden ist, worin $R_1$, $R_2$, $R_3$, $R_4$ und $R_5$ jeweilsein Wasserstoffatom, ein Halogenatom oder einen substituierten oder unsubstituierten Kohlenwasserstoffrest darstellen und wenigstens einer derselben ein Wasserstoffatom ist.

3. Verfahren nach Anspruch 1 oder Anspruch 2, worin das besagte Propylenpolymer (b) ein hochkristallines Polypropylen ist, welches ein Propylenhomopolymer oder Blockcopolymer mit einer isotaktischen Pentad-Fraktion von 0,970 oder höher darstellt, definiert als eine isotaktische Pentad-Fraktion in einem siedenden Heptan-unlöslichen Anteil des Propylen-Homopolymeranteils des Propylens.

4. Verfahren nach Anspruch 3, worin das besagte Propylenpolymer einen Gehalt an einem Heptanlöslichen Anteil von 5,0 Gewichts-% oder weniger und einem Gehalt eines bei 20 °C Xylollöslichen Anteils von 2,0 Gewichts-% oder weniger aufweist.

5. Verfahren nach einem der Ansprüche 1 bis 4, worin das besagte Propylenpolymer als Komponente (b) ein kristallines Propylenpolymer ist, welches eine grundmolare Viskosität [n](Tetralinlösung, 135 °C) von 1,0 bis 1,50 dl/g und einen Ethylengehalt von 4 Gewichts-% oder weniger aufweist.

6. Verfahren nach einem der Ansprüche 1 bis 5, worin die sauerstoffhaltige ungesättigte organische Verbindung in der besagten Komponente (c) eine organische Verbindung ist, die ein oder mehrere Säure- oder Säureanhydrid-Einheiten aufweist, ausgewählt aus Acrylsäure, Methacrylsäure, Maleinsäure, Itaconsäure, Fumarsäure, Maleinsäureanhydrid und Itaconsäureanhydrid.

7. Verfahren nach einem der Ansprüche 1 bis 6, worin das besagte polymere Material (d) wenigstens ein Bestandteil ist, ausgewählt aus Ethylen/α-Olefincopolymer und seinen modifizierten Produkten Ethylen/Propylen-ungesättigtem Diengummi und seinen modifizierten Produkten, Butadien/Styrol-Copolymer und seinen modifizierten Produkten und Epoxygruppenhaltiges Copolymer.

**8.** Verfahren nach Anspruch 7, worin das besagte Ethylen/α-Olefincopolymer ein solches ist, welches einen Ethylengehalt von 15 - 85 Gewichts-%, eine Mooney-Viskosität von ML1 + 4, (121 °C) von 5 bis 120, einen Glasübergangspunkt von -10 °C oder weniger aufweist.

**9.** Verfahren nach einem der Ansprüche 1 bis 8, worin die besagte Silanverbindung wenigstens eine Silanverbindung ist, die ausgewählt ist aus β-(3,4-Epoxycyclohexyl)-ethyltri-methoxysilan, γ-Glycidoxvpropyltrimethoxysilan, Vinyltriethoxysilan, Vinyltrichlorsilan, γ-Aminopropyltriethoxysilan und N- β- (Aminoethyl)- γ-Aminopropyltrimethoxysilan.

**10.** Ausgeformter Gegenstand, der aus der Harzzusammensetzung nach einem der Ansprüche 1 bis 9 hergestellt worden ist.

**11.** Gegenstand nach Anspruch 10, der ein Fahrzeugteil ist, ausgewählt für eine Stoßstange, Armaturenbrett, Kotflügel, Innenausstattung, Türverkleidung, Radkappe, Seitenschutzvorrichtung, Seitenabschlußverzierung, Kofferraumdeckel, Haube, Krümmerverkleidung, Lufteinlaß, untere Andeckplatte, Spoiler, Frontgrill, Kühlergrill, Spiegelgehäuse, Luftreiniger, Kernmaterial des Sitzes, Handschuhfach, Konsolenfach, Kühlgebläse, Siroccogebläse, Bremsöltank, Lampengehäuse und Dach.

**Revendications**

**Revendications pour les Etats contractants suivants : DE, FR, GB, IT, NL**

**1.** Composition de résine comprenant :
(A) 100 parties en poids de
(a) 1 à 50% en poids d'un polyéther de phénylène ou d'une composition de résine contenant un polyéther de phénylène,
(b) au moins 18% en poids d'un polymère du propylène,
(c) 10 à 40% en poids d'un polymère du propylène modifié avec un composé organique insaturé oxygéné,
(d) 0 à 30% en poids d'un matériau élastique à température ambiante à base d'un polymère synthétique ou naturel, et
(B) 3 à 60 parties en poids de fibres de verre traitées au silane.

**2.** Composition de résine selon la revendication 1, dans laquelle ledit polyéther de phénylène utilisé en tant que constituant (a) est un polymère obtenu par polymérisation oxydante d'un ou plusieurs composés phénoliques de formule (I)

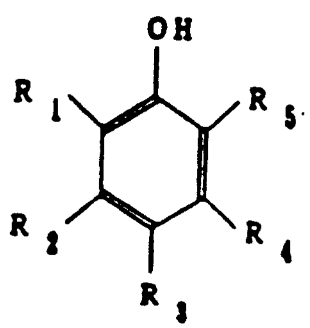

(I)

dans laquelle $R_1$, $R_2$, $R_3$, $R_4$ et $R_5$ représentent chacun un atome d'hydrogène, un atome d'halogène ou un résidu hydrocarboné substitué ou non substitué, l'un au moins d'entre eux étant un atome d'hydrogène.

**3.** Composition de résine selon la revendication 1 ou 2, dans laquelle ledit polymère de propylène (b) est un polypropylène fortement cristallin qui est un homopolymère du propylène ou un copolymère séquencé ayant une fraction de pentade isotactique de 0,970 ou supérieure définie comme étant la fraction de pentade isotactique dans la portion insoluble dans l'heptane bouillant de la partie homopolymère de propylène du polypropylène.

4. Composition de résine selon la revendication 3, dans laquelle la fraction de polymère de propylène soluble dans l'heptane représente 5% en poids ou moins et la fraction soluble dans le xylène à 20 °C représente 2% en poids ou moins.

5. Composition de résine selon l'une quelconque des revendications 1 à 4, dans laquelle ledit constituant (b), polymère de propylène, est un polymère cristallin du propylène qui présente une viscosité intrinsèque ($\eta$) (solution de tétraline, 135 °C) comprise entre 1,00 et 1,50 dl/g et une teneur en éthylène de 4% en poids ou moins.

6. Composition de résine selon l'une quelconque des revendications 1 à 5, dans laquelle le composé organique insaturé oxygéné dans ledit constituant (c) est un composé organique présentant une ou plusieurs unités acides ou anhydrides d'acide choisies parmi l'acide acrylique, l'acide méthacrylique, l'acide maléique, l'acide itaconique, l'acide fumarique, l'anhydride maléique et l'anhydride itaconique.

7. Composition de résine selon l'une quelconque des revendications 1 à 6, dans laquelle ledit matériau à base de polymère (d) est au moins un compose' choisi parmi un copolymère éthylène/$\alpha$-oléfine et ses dérivés, un caoutchouc éthylène/propylène/diène insaturé et ses dérivés, un copolymère butadiène/styrène et ses dérivés et un copolymère à groupe époxy.

8. Composition de résine selon la revendication 7, dans laquelle ledit copolymère éthylène/$\alpha$-oléfine présente une teneur en éthylène de 15 à 85% en poids, une viscosité de ML1 + 4 de Mooney, (121 °C) de 5 à 120 et une température de transition vitreuse de -10 °C ou moins.

9. Composition de résine selon l'une quelconque des revendications 1 à 8, dans laquelle ledit dérivé du silane est choisi parmi le $\beta$-(3,4-époxycyclo-hexyl)éthyltriméthoxysilane, le $\gamma$-glycidoxypropyltriméthoxysilane, le vinyltriéthoxysilane, le vinyltrichlorosilane, le $\gamma$-aminopropyltriéthorysilane et le N-$\beta$-(aminoéthyl)-$\gamma$-aminopropyltriméthoxysilane.

10. Article moulé à base d'une composition de résine selon l'une quelconque des revendications 1 à 9.

11. Article selon la revendication 10, en tant qu'élément pour véhicule automobile choisi parmi un pare-choc, un tableau de bord, une aile de voiture, une garniture intérieure, une portière, un enjoliveur, un dispositif protecteur latéral, une garniture pour joint latéral, une porte de coffre, un capot, un panneau arrière, un dispositif d'admission d'air, une moulure d'alège inférieure, un déporteur, une grille frontale, une grille de radiateur, un boîtier de miroir, un épurateur d'air, un matériau d'armature de siège, une boîte à gants, une boîte de commande, un ventilateur à air froid, un ventilateur à air chaud, un réservoir d'huile de frein, un boîtier de lampe, et un toit.

**Revendications pour l'Etat contractant suivant : ES**

1. Procédé pour la préparation d'une composition de résine comprenant les étapes consistant à :
   (A) préparer un mélange de :
      (a) 1 à 50% en poids d'un polyéther de phénylène ou d'une composition de résine contenant un polyéther de phénylène,
      (b) au moins 18% en poids d'un polymère du propylène,
      (c) 10 à 40% en poids d'un polymère du propylène modifié avec un composé organique insaturé oxygéné,
      (d) 0 à 30% en poids d'un matériau élastique à température ambiante à base d'un polymère synthétique ou naturel, et
   (B) ajouter à 100 parties en poids du mélange précédent, 3 à 60 parties en poids de fibres de verre traitées au silane.

2. Procédé selon la revendication 1, caractérisé en ce que ledit polyéther de phénylène utilisé en tant que constituant (a) est un polymère obtenu par polymérisation oxydante d'un ou plusieurs composés phénoliques de formule (I)

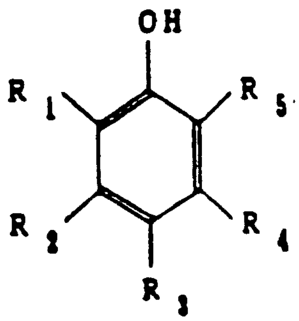

(I)

dans laquelle $R_1$, $R_2$, $R_3$, $R_4$ et $R_5$ représentent chacun un atome d'hydrogène, un atome d'halogène ou un résidu hydrocarboné substitué ou non substitué, l'un au moins d'entre eux étant un atome d'hydrogène.

**3.** Procédé selon la revendication 1 ou la revendication 2, caractérisé en ce que ledit polymère de propylène (b) est un polypropylène fortement cristallin qui est un homopolymère du propylène ou un copolymère séquencé ayant une fraction de pentade isotactique de 0,970 ou supérieure définie comme étant la fraction de pentade isotactique dans la portion insoluble dans l'heptane bouillant de la partie homopolymère de propylène du polypropylène.

**4.** Procédé selon la revendication 3, caractérisé en ce que la fraction de polymère de propylène soluble dans l'heptane représente 5% en poids ou moins et la fraction soluble dans le xylène à 20 °C représente 2% en poids ou moins.

**5.** Procédé selon l'une quelconque des revendications 1 à 4, caractérisé en ce que ledit constituant (b), polymère de propylène, est un polymère cristallin du propylène qui présente une viscosité intrinsèque ($\eta$) (solution de tétraline, 135 °C) comprise entre 1,00 et 1,50 dl/g et une teneur en éthylène de 4% en poids ou moins.

**6.** Procédé selon l'une quelconque des revendications 1 à 5, caractérisé en ce que le composé organique insaturé oxygéné dans ledit constituant (c) est un composé organique présentant une ou plusieurs unités acides ou anhydrides d'acide choisies parmi l'acide acrylique, l'acide méthacrylique, l'acide maléique, l'acide itaconique, l'acide fumarique, l'anhydride maléique et l'anhydride itaconique.

**7.** Procédé selon l'une quelconque des revendications 1 à 6, caractérisé en ce que ledit matériau à base de polymère (d) est au moins un composé choisi parmi un copolymère éthylène/$\alpha$-oléfine et ses dérivés, un caoutchouc éthylène/propylène/diène insaturé et ses dérivés, un copolymère butadiène/styrène et ses dérivés et un copolymère à groupe époxy.

**8.** Procédé selon la revendication 7, caractérisé en ce que ledit copolymère éthylène/$\alpha$-oléfine présente une teneur en éthylène de 15 à 85% en poids, une viscosité de ML1 + 4 de Mooney, (121 °C) de 5 à 120 et une température de transition vitreuse de -10 °C ou moins.

**9.** Procédé selon l'une quelconque des revendications 1 à 8, caractérisé en ce que ledit dérivé du silane est choisi parmi le $\beta$ -(3,4-époxycyclo-hexyl)éthyltriméthoxysilane, le $\gamma$-glycidoxypropyltrimé-thoxysilane, le vinyltriéthoxysilane, le vinyltrichlorosilane, le $\gamma$-aminopropyltriéthoxysilane et le N-$\beta$-(aminoéthyl)-$\gamma$-aminopropyltriméthoxysilane.

**10.** Article moulé à base d'une composition de résine selon l'une quelconque des revendications 1 à 9.

**11.** Article selon la revendication 10, en tant qu'élément pour véhicule automobile choisi parmi un pare-choc, un tableau de bord, une aile de voiture, une garniture intérieure, une portière, un enjoliveur, un dispositif protecteur latéral, une garniture pour joint latéral, une porte de coffre, un capot, un panneau arrière, un dispositif d'admission d'air, une moulure d'alège inférieure, un déporteur, une grille frontale, une grille de radiateur, un boîtier de miroir, un épurateur d'air, un matériau d'armature de siège, une boîte à gants, une boîte de commande, un ventilateur à air froid, un ventilateur à air chaud, un

réservoir d'huile de frein, un boîtier de lampe, et un toit.